(19) Europäisches Patentamt / European Patent Office / Office européen des brevets

(11) **EP 3 916 553 A1**

(12) **EUROPÄISCHE PATENTANMELDUNG**

(43) Veröffentlichungstag:
**01.12.2021 Patentblatt 2021/48**

(21) Anmeldenummer: **20177414.8**

(22) Anmeldetag: **29.05.2020**

(51) Int Cl.:
**G06F 9/50** *(2006.01)*          **H04L 12/803** *(2013.01)*
**H04L 29/08** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Gesswein, Jürgen**
  **86156 Augsburg (DE)**
• **Hupp, Lena**
  **81371 München (DE)**
• **Müller, Harald**
  **82229 Seefeld-Hechendorf (DE)**
• **Royer, Christian**
  **85521 Ottobrunn (DE)**

(54) **VERFAHREN UND VORRICHTUNG ZUM VERTEILEN VON SOFTWAREKOMPONENTEN EINER ODER MEHREREN APPLIKATIONEN AUF FÜR DEREN AUSFÜHRUNG GEEIGNETE INFRASTRUKTURKOMPONENTEN EINER INDUSTRIELLEN INFRASTRUKTUR**

(57)    Die Erfindung beansprucht ein rechnergestütztes Verfahren zum Verteilen von Softwarekomponenten einer oder mehreren Applikationen auf für deren Ausführung geeignete Infrastrukturkomponenten einer industriellen Infrastruktur, welche eine Menge von Infrastrukturkomponenten umfasst, welche aus einer Menge von Rechenknoten (C) und einer Menge von Netzwerkknoten (N) gebildet wird, wobei eine Applikation eine oder mehrere Softwarekomponenten aufweist, die über Schnittstellen ($I_{01}$ bis $I_{03}$, $I_{13}$) untereinander Daten austauschen und/oder übergeben, wobei die Rechenknoten jeweils mit wenigstens einer Infrastrukturkomponente über eine Verbindung verbindbar oder verbunden sind, welche zumindest Teil eines zur Infrastruktur gehörigen Kommunikationsnetzwerkes ist, an das die Rechenknoten angeschlossen sind, wobei die Rechenknoten jeweils fähigkeitsspezifische Eigenschaften, die Verbindungen jeweils übertragungsspezifische Eigenschaften aufweisen,

dadurch gekennzeichnet, dass die Verteilung der Softwarekomponenten mit dem Ziel optimiert wird, dass möglichst viele Applikationen einer vorgebbaren Menge von Applikationen in der Infrastruktur unter der Voraussetzung zur Anwendung kommen können, dass jede Softwarekomponente einer Applikation nur einem Rechenknoten, auf welchem sie unter Berücksichtigung der fähigkeitsspezifischen Eigenschaften ausführbar ist, zugewiesen wird und dass für jede Schnittstelle zwischen zumindest zwei dieser zugewiesenen Softwarekomponenten eine Verbindung oder mehrere via ein oder mehrere Netzwerkknoten hintereinander gekoppelte Verbindungen unter Berücksichtigung der übertragungsspezifischen und ressourcenspezifischen Eigenschaften ausgewählt wird oder werden.

FIG 2

**Beschreibung**

Die Erfindung betrifft Verfahren und Vorrichtung zum Verteilen von Softwarekomponenten einer oder mehreren Applikationen auf für deren Ausführung geeignete Infrastrukturkomponenten einer industriellen Infrastruktur sowie ein zugehöriges Computerprogramm(-produkt) .

Eine industrielle Infrastruktur kann ein modernes Automatisierungssystem sein. Es zeichnet sich durch zentralisierte und hierarchische Steuerungsarchitekturen aus, wie z. B. die Automatisierungspyramide gemäß den Standards ISA-95 und IEC 62264. Nach diesen Standards stellt die eigentliche konventionelle Architektur der Automatisierungspyramide eine klare Trennung von Systemen und Funktionalitäten in fünf Architekturebenen dar, die ihren eigenen spezifischen Automatisierungszweck haben und nur mit den angrenzenden Architekturebenen Informationen austauschen. Dabei repräsentiert die unterste Architekturebene den Fertigungs- und Produktionsprozess, welcher mittels Eingangs- und Ausgangssignale I/O einer Feldumgebung durch sogenannte SPS-Maschinen (SPS in Englisch: PLC: Programmable Logic Controller) auf einer Steuerungsumgebung gesteuert wird. Steuerungsebene bzw. -umgebung und Feldebene bzw. -umgebung bilden dabei die nächsthöhere Architektureeben. Diese Architekturebene ist meist als Prozessleit- und/oder Kommunikationsnetzwerkumgebung ausgeprägt und wird oft mit dem Begriff SCADA (Supervisory Control and Data Acquisition) abgekürzt. Eine Betriebsleitumgebung bzw. -ebene bildet die nächst höhere Architekturebene und wird häufig mit dem Begriff MES (Manufacturing Execution System) abgekürzt. Eine Unternehmensumgebung bzw. -ebene bildet die höchste Architekturebeneund wird häufig mit dem Begriff ERP (Enterprise Ressource Planning) abgekürzt.

Diese hierarchische Automatisierungsstruktur nach dem ISA-Standard formalisiert die Interaktionen dieser Hierarchieebenen, um eine automatisierte Kommunikation zwischen Unternehmensplanung und Fertigungssteuerungssystemen zu ermöglichen.

Eine hierarchische Struktur weist eine hohe Robustheit auf und betont eine gute Vorhersagbarkeit und eine globale Systemoptimierung. Einerseits ist diese Struktur für kleine Systeme effektiv, die in sehr stabilen und strukturierten Umgebungen ausgeführt werden, in denen die Pyramide gemäß ISA-95 für eine einfache Entwicklung und Wartung genutzt werden kann Diese Zuverlässigkeit zwischen den Architekturebenen führt zu unzureichender Anpassungsfähigkeit und Flexibilität bei Produktionsänderungen. Darüber hinaus kann ein einzelner Fehlerpunkt die Systemleistung drastisch reduzieren. Informationen werden auch inkonsistent und veraltet, sobald eine Kommunikationsverzögerung auftritt, die die teilweise und globale Entscheidungsfindung beeinträchtigt. Verschiedenste Arten von Hard- und Software kommen hierbei zum Einsatz. Daraus resultiert, dass auch die Kommunikation zwischen diesen Komponenten inhomogen ist. Während auf den unteren Architekturebenen in der Regel Kommunikationsprotokolle wie Profinet (Process Field Network) eingesetzt wird, ist auf den oberen Architekturebenen der Einsatz von OPC-UA (Open Platform Communications - Unified Architecture) gepaart mit TSN (Time Sensitive Network) möglich. Jedoch sind an den Grenzen der Architekturebenen immer Netzwerkschnittstellen - bzw. Gateways notwendig, um die uneinheitlichen Kommunikationsprotokolle zu übersetzen. Auch die Datenhaltung ist inhomogen. Die Art des Engineerings der einzelnen Komponenten unterscheidet sich ebenfalls stark.

Unter diesen Inhomogenitäten leiden auch die Wartbarkeit, Erweiterbarkeit und Aktualisierbarkeit. In diesem Umfeld besteht der Wunsch, einen nahtlosen Übergang zwischen den oben beschriebenen Architekturebenen zu schaffen.

Es ist der Einsatz eines modularen Systems als industrielle Infrastruktur sinnvoll. Ein solches modulares System funktioniert in der Regel nur, wenn alle Infrastrukturkomponenten und Schnittstellen der Applikationen einwandfrei funktionieren und wenn bestimmte Randbedingungen erfüllt sind.

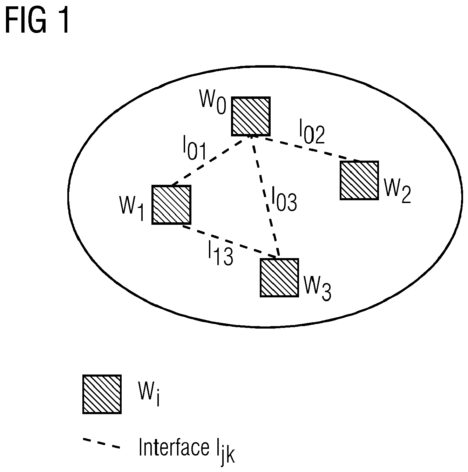

(Industrielle) Anwendungen A (auch Applikationen genannt) bestehen - wie beispielhaft in Figur 1 gezeigt - in der Regel aus mehreren abhängigen Softwarekomponenten (auch Workloads $W_0$ bis $W_3$ genannt), die Daten über Schnittstellen (auch Interfaces $I_{01}$ bis $I_{03}$, $I_{13}$ genannt) austauschen. Die Infrastrukturkomponenten können die Rechenknoten und Netzwerkknoten umfassen. Die Infrastrukturkomponenten können physische und/oder virtuelle Komponenten sein. Rechenknoten sind Teile von Recheneinheiten, sie können entweder reine Hardwareknoten oder virtuelle Maschinen sein. Rechenknoten anderer Domänen, wie z.B. der Cloud, dem Datencenter oder der Edge, werden auf die gleiche Weise modelliert, d.h. die Eigenschaften der Domänen werden durch die Eigenschaften der Modellkomponenten ausgedrückt.

Die Schnittstellen haben jeweils bestimmte Merkmale (z.B. Rechenkomplexität, Speicherbedarf, Datenrate, Aufrufhäufigkeit). Darüber hinaus kann es zusätzlich Einschränkungen geben, die erfüllt werden müssen, damit die Applikation als voll funktionsfähig angesehen werden kann (z.B. End-to-End-Latenzzeit, Reaktionszeiten, Verfügbarkeit der Applikation oder Teile der Applikation, Datenschutzbeschränkungen für Infrastrukturkomponenten oder Schnittstellen). Diese Merkmale und Einschränkungen beschreiben hierbei schnittstellenspezifische Eigenschaften. Bei industriellen Systemen laufen die Infrastrukturkomponenten einer Applikation in der Regel auf verschiedenen Rechenknoten z.B. $C_j$ ggf. in verschiedenen Domänen bzw. unterschiedlichen Fertigungszellen. Die Rechenknoten sind durch Verbindungen z.B. $L_k$ und Netzknoten z.B. $N_i$ miteinander verbunden, wobei die obigen Indizes i, j, k = 1 bis n betragen. Die Rechenknoten können über einen einzelnen oder mehrere Netzwerkpfade miteinander verbunden sein. Die verschiedenen Rechenknoten können heterogen sein, d.h. sie haben unterschiedliche fähigkeitsspezifische Eigenschaften z.B. Rechenkapazität, Hauptspeicherkapazität, Speicherkapazität, CPU-Architektur. Die Verbindungen und die Netzwerkknoten Ni können ebenfalls unterschiedliche Eigenschaften haben. Übertragungsspezifische Eigenschaften der Verbindungen sind z.B. Bandbreite und Latenz und ressourcenspezifische Eigenschaften der Netzknoten sind z.B. Reaktionszeit, Ausfallsicherheit und Verfügbarkeit.

Eine hochmoderne Technologie zur Implementierung von Applikationen, die in modulare Softwarekomponenten unterteilt sein können, ist eine Containertechnologie (wie z.B. Docker). Softwarekomponenten können in Container gepackt werden, die auf einem oder mehreren Container-Clustern laufen können. Modernste Technologien zur Verwaltung mehrerer Container auf einem Cluster sind Container-Orchestrierungstechnologien wie z.B. Kubernetes. Kubernetes verfügt über einen Scheduler, der so genannte Pods (eine Sammlung von Containern) einem Satz von Knoten innerhalb eines Clusters zuweist. In diesem Sprachgebrauch von Kubernetes ist ein Knoten ein Computersystem, physisch oder virtuell, das für den Betrieb von Containern unter der Kontrolle von Kubernetes eingerichtet ist. Ein Cluster ist ein Gesamtsystem, dass sich aus Nodes zusammensetzt. Kubernetes fasst Container-Images (Speicherabbild eines Containers), ihre Konfiguration und die Anzahl der benötigten Instanzen in Deployments zusammen. Die Parameter eines Deployments überwacht Kubernetes selbsttätig. Das Tool sorgt dafür, dass die gewünschte Anzahl von Containern jederzeit läuft. Änderungen an der Software oder der Konfiguration verteilt Kubernetes mit einem Rollout. Kubernetes ist nicht für eine solche hierarchische Architektur, wie sie im industriellen Umfeld eingesetzt wird, konzipiert worden. Es werden bei der Verteilung der Pods keine fähigkeitsspezifischen, übertragungsspezifischen bzw. ressourcenspezifischen Eigenschaften innerhalb der erwähnten Infrastruktur berücksichtigt.

In EP 19152467.7 ist ein Scheduler zum Abbilden von industriellen Anwendungen auf eine spezifische Infrastruktur schon vorgeschlagen worden.

In US 16/365,965 ist ein Verfahren zum Betreiben eines Container-Orchestrierungssystems schon vorgeschlagen worden.

Aus "Optimal Operator Placement for Distributed Stream Processing Applications", Valeria Cardellini et al, DEBS '16: Proceedings of the 10th ACM International Conference on Distributed and Event-based Systems June 2016 Pages 69-80 (https://doi.org/10.1145/2933267.2933312) ist eine Applikationsverteilung bekannt. Die Zielfunktion der darin vorgeschlgenen gemischt ganzzahligen Optimierung (MILP) ist eine gewichtete Summe aus einer "ResponseTime" (Antwortzeit) und einer "Availability" (Verfügbarkeit), die Verbindungen zwischen den Knoten sind dabei fest vorgegeben.

MILP befasst sich mit der Optimierung linearer Zielfunktionen über eine Menge, die durch lineare Gleichungen und Ungleichungen eingeschränkt ist. Sie ist Grundlage der Lösungsverfahren der (gemischt-) ganzzahligen linearen Optimierung. Ein sogenannter Solver (Löser) ist eine Sammelbezeichnung für spezielle mathematische Computerprogramme, die mathematische Probleme numerisch lösen können. Im Zusammenhang mit MILP (mixed integer linear programming bzw. gemischt ganzzahlige lineare Programmierung) können für IP-Programme (ganzzahlige Optimierungsmodelle) Standardsolver wie z.B. CPLEX, Scip, Gurobi, Xpress verwendet werden.

Es ist Aufgabe der vorliegenden Erfindung, ein Verfahren und eine Vorrichtung gegenüber dem oben genannten Stand der Technik insbesondere im industriellen Umfeld zu verbessern.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Die Erfindung beansprucht ein rechnergestütztes Verfahren zum Verteilen von Softwarekomponenten einer oder mehreren Applikationen auf für deren Ausführung geeignete Infrastrukturkomponenten einer industriellen Infrastruktur, welche eine Menge von Infrastrukturkomponenten umfasst, welche aus einer Menge von Rechenknoten und einer Menge von Netzwerkknoten gebildet wird, wobei eine Applikation eine oder mehrere Softwarekomponenten aufweist, die über Schnittstellen untereinander Daten austauschen und/oder übergeben,

wobei die Rechenknoten jeweils mit wenigstens einer Infrastrukturkomponente über eine Verbindung verbindbar oder verbunden sind, welche zumindest Teil eines zur Infrastruktur gehörigen Kommunikationsnetzwerkes ist, an das die Rechenknoten angeschlossen sind, wobei die Rechenknoten jeweils fähigkeitsspezifische Eigenschaften, die Verbindungen jeweils übertragungsspezifische Eigenschaften aufweisen,
dadurch gekennzeichnet, dass die Verteilung der Softwarekomponenten mit dem Ziel optimiert wird, dass möglichst viele Applikationen einer vorgebbaren Menge von Applikationen in der Infrastruktur unter der Voraussetzung zur Anwendung kommen können, dass jede Softwarekomponente einer Applikation nur einem Rechenknoten, auf welchem sie unter Berücksichtigung der fähigkeitsspezifischen Eigenschaften ausführbar ist, zugewiesen wird und dass für jede Schnittstelle zwischen zumindest zwei dieser zugewiesenen Softwarekomponenten eine Verbindung oder mehrere via ein oder mehrere Netzknoten hintereinander gekoppelte Verbindungen unter Berücksichtigung der übertragungsspezifischen und ressourcenspezifischen Eigenschaften ausgewählt wird oder werden.

Die Optimierung kann mittels gemischt-ganzzahliger Optimierung durchgeführt werden.

Eine erste Infrastrukturkomponente (Startkomponente bzw. Source) ist jeweils über eine Verbindung bzw. über mehrere Verbindungen mit einer zweiten Infrastrukturkomponente (Zielkomponenten bzw. Destination) für einen Austausch (d.h. bidirektional) bzw. zur Übergabe (d.h. unidirektional) von Daten verbunden. In diesem Kontext werden diese Verbindung(en) als (Netzwerk-)Pfad von der ersten bis zur zweiten Infrastrukturkomponente genannt. Vorzugsweise ist jeder Pfad gerichtet.

Wenn Daten von einem ersten Rechenknoten zu einem zweiten Rechenknoten über eine oder mehrere gekoppelte Verbindungen übergeben werden, dann sollten umgekehrt vom zweiten Rechenknoten zum ersten Rechenknoten Daten über dieselbe Verbindung oder dieselben gekoppelten Verbindung übergeben werden.

Die Schnittstellen können jeweils schnittstellenspezifische Eigenschaften aufweisen.

Bei Auswahl mehrerer gekoppelten Verbindungen für eine Schnittstelle die Summe der Werte der übertragungsspezifischen Eigenschaften über die mehreren Verbindungen den entsprechenden oder vergleichbaren Wert der schnittstellenspezifischen Eigenschaft der Schnittstelle unterschreiten oder identisch sein muss. Mit anderen Worten ausgedrückt: Jeder Pfad (eine Verbindung bzw. mehrere gekoppelte Verbindungen) hat beispielsweise eine Latenz als übertragungsspezifische Eigenschaft. Jede Schnittstelle hat eine maximale Latenz als entsprechende schnittstellenspezifische Eigenschaft. Wenn eine Schnittstelle über einen Pfad läuft, d.h. Daten über den Pfad leitet, muss die Latenz des Pfades kleiner gleich der maximalen Latenz der Schnittstelle sein.

Wenn mehrere Schnittstellen über die gleiche Verbindung geführt werden bzw. Daten über die gleiche Verbindung leiten sollen, dann muss die Summe der Werte der schnittstellenspezifischen Eigenschaften über die mehreren Schnittstellen den entsprechenden oder vergleichbaren Wert der übertragungsspezifischen Eigenschaft der gleichen Verbindung unterschreiten oder identisch sein.

Jede Verbindung hat eine maximale Bandbreite als übertragungsspezifische Eigenschaft, die nicht überschritten werden darf. Demnach muss für jede einzelne Verbindung im Kommunikationsnetzwerk gelten: Die Summe der Bandbreiten aller Schnittstellen als schnittstellenspezifische Eigenschaften, die über einen Pfad laufen bzw. dem Pfad zugeordnet sind), der diese betrachtete Verbindung benutzt, muss kleiner oder gleich der Bandbreite der betrachteten Verbindung als entsprechende übertragungsspezifische Eigenschaft sein.

Die Netzwerkknoten können jeweils ressourcenspezifische Eigenschaften aufweisen, die bei der Auswahl der einen oder mehreren Verbindungen berücksichtigt werden.

Es kann eine Gewichtung bei der Berücksichtigung der fähigkeitsspezifischen, der übertragungsspezifischen und/oder der ressourcenspezifischen Eigenschaften in die Optimierung eingehen.

Alle Softwarekomponenten einer jeden Applikation, die zur Anwendung kommen bzw. in der Infrastruktur installiert bzw. ausgeführt werden soll, werden demnach jeweils einem Rechenknoten zugewiesen. Für den Datenaustausch/-übergabe der Schnittstellen müssen entsprechende Netzwerkpfade in der Netzwerkinfrastruktur gefunden werden. Dabei können jeweils mehrere mögliche Netzwerkpfade zur Auswahl stehen. Die Verteilung bzw. Platzierung der Softwarekomponenten und das Routing der Daten im Kommunikationsnetzwerk, erfolgt derart, dass alle Anforderungen der Applikationen, des Kommunikationsnetzes und der Infrastrukturkomponenten erfüllt werden.

Die oben genannten kennzeichnenden Schritte können wiederholt werden.

Die Infrastruktur umfasst hierbei zumindest ein Kommunikationsnetzwerk und die Infrastrukturkomponenten. Rechenknoten können etwa Fertigungsmaschinen, (IoT-)Geräte, Terminal, PCs und ggf. Sensoren bzw. Aktoren sein. Die Kopplung bzw. die Verbindung von Rechen- bzw. Netzknoten kann hierbei ggf. physikalisch bidirektional (Datenaustausch) oder unidirektional (Datenübergabe) ausgebildet sein.

Der Datenaustausch bzw. die Datenübergabe kann auch nur einfache Nachrichten bzw. ggf. nur das Senden bzw. Empfangen von einfachen Signalen umfassen. Hierbei kann der Datenaustausch verdrahtet oder drahtlos mittels gängiger Funktechnik WLAN, Bluetooth, NFC, Mobilfunk etc. ausgeprägt sein kann.

Die Applikation kann firm- und/oder softwaretechnisch als App oder auch als Container ausgeprägt sein. Container betten den Softwarecode einer Applikation in einen sicheren Speicherbereich ein, zu dem es dann nur einen ganz geregelten, ggf. verschlüsselten bzw. zertifizierten Zugang von außen gibt.

Bei der Verteilung der Softwarekomponenten können auch kryptographischspezifische Eigenschaften der Infrastrukturkomponenten berücksichtigt werden.

Kryptographische Eigenschaften können durch eine Art Härtemaß hinsichtlich einer Wahrscheinlichkeit, dass von außen ein Angriff erfolgreich ist, ausgedrückt werden. So könnte ein asymmetrisches Verschlüsselungsverfahren ein anderes Härtemaß aufweisen als ein symmetrisches Verschlüsselungsverfahren. Weitere neben vielen anderen kryptographische Schutzmaßnahmen sind Signaturverfahren und ggf. Zertifikate. Auch diesen kann ein Härtemaß zugewiesen werden.

Damit kann bei der Auswahl der Verbindung oder der mehreren Verbindungen nicht nur der Durchsatz, sondern auch die Fähigkeit eines oder mehrerer Knoten dieser Verbindung(en), Angriffe von außen abzuwehren, ein Rolle spielen.

Es müssen nicht alle Applikationen zur Anwendung kommen bzw. verteilt werden. Applikationen werden nur mit allen Softwarekomponenten verteilt. Wenn die Softwarekomponenten einer Applikation einer vorgebbaren disjunkte Unter- bzw. Teilmenge bzw. Gruppe von Softwarekomponenten derselben Applikation angehören, dann sind diese Softwarekomponenten unterschiedlichen Rechenknoten zuzuordnen. Damit können die fähigkeitsspezifischen Eigenschaften der Rechenknoten optimal genutzt werden.

Ein weiterer Aspekt der Erfindung ist eine Vorrichtung, insbesondere ein Scheduler, zum Verteilen von Softwarekomponenten einer oder mehreren Applikationen auf für deren Ausführung geeignete Infrastrukturkomponenten einer industriellen Infrastruktur, welche eine Menge von Infrastrukturkomponenten umfasst, welche aus einer Menge von Rechenknoten (C) und einer Menge von Netzwerkknoten (N) gebildet wird, wobei eine Applikation eine oder mehrere Softwarekomponenten aufweist, die über Schnittstellen ($I_{01}$ bis $I_{03}$, $I_{13}$) untereinander Daten austauschen und/oder übergeben,

wobei die Rechenknoten jeweils mit wenigstens einer Infrastrukturkomponente über eine Verbindung verbindbar oder verbunden sind, welche zumindest Teil eines zur Infrastruktur gehörigen Kommunikationsnetzwerkes ist, an das die Rechenknoten angeschlossen sind, wobei die Rechenknoten jeweils fähigkeitsspezifische Eigenschaften, die Verbindungen jeweils übertragungsspezifische Eigenschaften aufweisen, gekennzeichnet durch eine Optimierungskomponente, die dazu ausgelegt ist, die Verteilung der Softwarekomponenten mit dem Ziel zu optimieren, dass möglichst viele Applikationen einer vorgebbaren Menge von Applikationen in der Infrastruktur unter der Voraussetzung zur Anwendung kommen können, dass jede Softwarekomponente einer Applikation nur einem Rechenknoten, auf welchem sie unter Berücksichtigung der fähigkeitsspezifischen Eigenschaften ausführbar ist, zugewiesen wird und dass für jede Schnittstelle zwischen zumindest zwei dieser zugewiesenen Softwarekomponenten eine Verbindung oder mehrere via ein oder mehrere Netzknoten hintereinander gekoppelte Verbindungen unter Berücksichtigung der übertragungsspezifischen und ressourcenspezifischen Eigenschaften ausgewählt wird oder werden.

Die Vorrichtung und das Computerprogramm(produkte) können entsprechend des oben beschriebenen Verfahrens bzw. der Weiterbildungen/Ausführungsformen des vorliegenden Verfahrens aus- bzw. weitergebildet sein.

Vorteile der Erfindung sind:
Mit der Verteilung der Softwarekomponenten auf Rechenknoten wird jeweils der beste Netzwerkpfad aus einer Menge möglicher Netzwerkpfade für den Datenaustausch zweier Softwarekomponenten bestimmt. Es sind somit mehrere Wege über Netzwerkpfade von einem ersten Rechenknoten (Source) zu einem zweiten Rechenknoten (Destination) möglich, sofern die Vorwärts- und Rückwärts-Kommunikation zweier Rechenknoten über den gleichen Netzwerkpfad verläuft. Damit können nicht nur Bandbreite ausgenutzt und die Latenzzeit verringert werden, sondern ein nahtloser Übergang zwischen den oben beschriebenen Architekturebenen geschaffen werden.

Durch die in einer Weiterbildung der Erfindung beschriebenen MILP-Ansatz lassen sich effizient optimale Lösungen finden, die beide Anforderungen Verteilung möglichst vieler Applikationen unter Berücksichtigung der übertragungsspezifischen Eigenschaften im Netzwerk vereinen.

Des Weiteren wird ein Computerprogramm(produkt) umfassend Programm-Code, der von mindestens einem Prozessor ausgeführt werden kann und der bewirkt, dass der mindestens einen Prozessor das erfindungsgemäße Betriebsverfahren und dessen Ausführungsformen ausführt. Das Computerprogramm kann auf einem Rechner z.B. in der Cloud, Server und/oder PC ablaufen oder als Computerprogrammprodukt auf einem computerlesbaren Medium gespeichert sein. Dabei bringt das Computerprogramm die Laufzeitumgebung zum Ablauf.

Zusätzlich kann eine Variante des Computerprogramm(produkte)s mit Programmbefehlen zur Konfiguration eines Erstellungsgeräts, beispielsweise ein 3D-Drucker, ein Computersystem oder eine zur Erstellung von Prozessoren und/oder Geräten geeignete Herstellungsmaschine sein.

Die Mittel können Hardware-, Firmware und/oder Softwareeinheiten bzw. -module sein.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter Bereitstellen kann verstanden werden, dass die Applikation und/oder Fähigkeitspakete selbst den oben genannten Mitteln z.B. in Form einer Verarbeitungseinheit bzw. CPU bzw. einer Kontrolleinheit (Control Unit) bereitgestellt wird. Unter Bereitstellen kann ebenso verstanden werden, dass der Verarbeitungseinheit eine Operation bereitgestellt wird, wobei die Operation die bereitgestellte Applikation selbst sein kann und/oder die Fähigkeitspakete zur Steuerung und/oder Ausführung der Konfiguration verwendet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigt:

Figur 1     schematisch die eingangs erwähnte Applikation und

Figur 2     schematisch eine industrielle Infrastruktur mit Kommunikationsnetzwerk.

Figur 1 zeigt eine industrielle Applikation A besteht aus mehreren (Software-)Komponenten (Workloads, WL), welche Daten über Schnittstellen (Interfaces) austauschen. Jede Komponente wird durch einen Satz von Parametern charakterisiert, die die Anforderungen, Einschränkungen und das Verhalten als Eigenschaft dieser beschreiben. Dazu gehören z.B. die Rechenkomplexität (CPU), Speicherverbrauch (RAM), etc. Jede Schnittstelle wird ebenfalls durch einen Satz von Parametern bzw. schnittstellenspezifischen Eigenschaften charakterisiert, die den Datenfluss bzw. den Datendurchsatz auf dieser Schnittstelle charakterisieren. Dies kann zum Beispiel die benötigte Bandbreite bzw. die maximal zulässige Latenz sein.

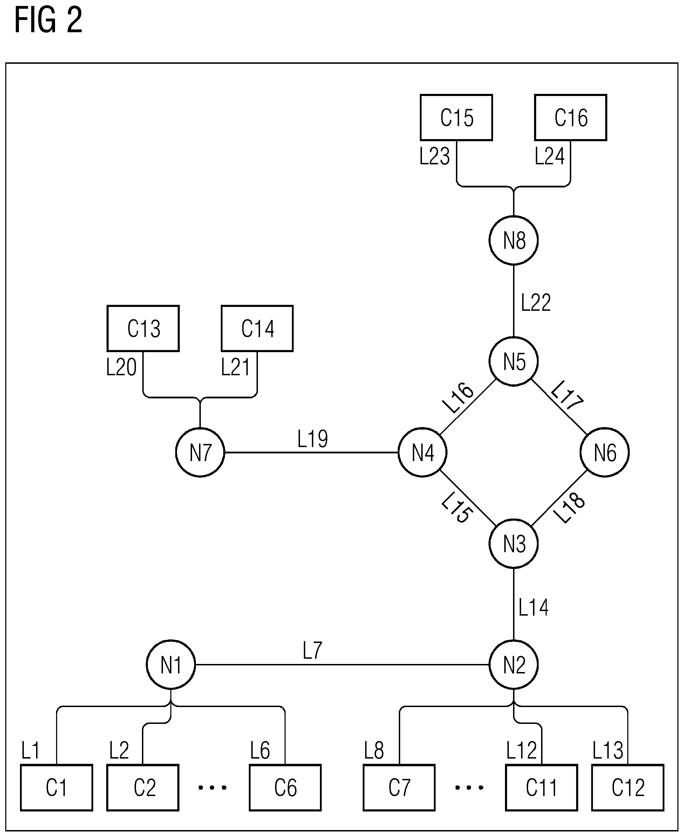

Figur 2 zeigt schematisch eine Infrastruktur, welche die relevanten Infrastrukturkomponenten und der Eigenschaften, auf der die industriellen Applikationen verteilt und ausgeführt werden, umfasst. Die Infrastruktur besteht aus Rechenknoten C1 bis C16, Verbindungen L1 bis L24 und Netzwerkknoten N1 bis N8.

Nach dem Industriestandard - wie eingangs erwähnt ISA-95 - können im Beispiel die Rechenknoten C1 bis C6 mit dem Netzknoten N1 eine Domäne bzw. Fertigungszelle und die Rechenknoten C7 bis C12 mit dem Netzknoten N2 eine weitere Domäne bzw. Fertigungszelle bilden. Nach dem ISA-95 Standard gehören dann diese beiden Fertigungszellen zur Fertigungsebene bzw. zur Steuerungs- und Feldebene gehören. Die Rechenknoten C13 und C14 mit dem Netzknoten N7 können im Beispiel zur Betriebsleitebene gehören. Die Rechenknoten C15 und C16 mit Netzknoten N8 können im Beispiel zur Unternehmensebene gehören. Die Netzknoten N2, N7 und N8 können hierbei jeweils als sogenannte EDGE ausgebildet sein. Rechenknoten C15 kann hierbei Cloud-Dienste anbieten und Rechenknoten C16 kann ein Datencenter sein. Im Beispiel können dementsprechend die Netzknoten N3 bis N6 ein Kommunikationsnetzwerk bilden, das drahtgebunden und/oder drahtlos ausgebildet sein kann. Hierbei ist die Verwendung von Kommunikationsstandards wie Mobilfunk (z.B. LTE, 5G etc.), WIFI, LAN und ein Intra- bzw. Internet denkbar.

Jeder Rechenknoten hat eine Reihe von fähigkeitsspezifischen Eigenschaften wie die Arbeitsspeicherkapazität oder die Rechenleistung. Verbindungen (oder auch Links genannt) entsprechen relevanten Netzwerkverbindungen in der beschriebenen Infrastruktur. Jede Verbindung wird durch eine Reihe von Parametern bzw. Eigenschaften charakterisiert, wie Bandbreite und Latenzcharakteristiken. Ein Netzwerkknoten verknüpft zwei oder mehrere Verbindungen. Ein Netzwerkknoten abstrahiert normalerweise physische oder virtuelle Netzwerkgeräte wie Switches oder Router. Ein Netzwerkknoten kann neben der Sicherstellung der Konnektivität von Verbindungen auch weitere Eigenschaften haben, die das Netzwerk beeinflussen, wie eine minimale Latenzzeit.

Die Vorrichtung, z.B. der Scheduler, welcher als Clouddienst ausgestaltet sein kann, weist beispielsweise eine Optimierungskomponenten auf, die eine modellierte Optimierung aufweist. Mit Hilfe des Optimierungsmodells, vorzugsweise ein gemischt-ganzzahliges Optimierungsmodell (MILP), werden die Applikationen auf ein Kommunikationsnetzwerk der Infrastruktur verteilt, welches durch eine Menge an Infrastrukturkomponenten bzw. Knoten *(Nodes={n1,n2,..})* und eine Menge an Verbindungen *(Links={ (n1,n2),...})* gekennzeichnet ist. Die Menge der Knoten (Nodes), auch Infrastrukturkomponenten genannt, enthält sowohl die Rechenknoten als auch die Netzwerkknoten. Die Verbindungen sind vorzugsweise gerichtet, d.h, ist *(n1, n2)* eine Vorwärtsverbindung dann ist *(n2, n1)* die entsprechende Rückwärtsverbindung. Eine Abfolge mehrerer Knoten, die jeweils eine Verbindung besitzen bzw. über Verbindungen miteinander gekoppelt sind, wird Pfad genannt. Ebenso ist jeder Pfad gerichtet. Ein Knoten in einem Pfad *p* wird mit *(node = node(p))* bezeichnet. Kreise in einem Pfad sind ausgeschlossen. Jeder Pfad hat einen Startknoten, den wir mit source *(=source(p))* bezeichnen und einen Zielknoten *destination (= dest(p))*. Zwischen jedem Paar von Knoten *n1, n2* kann es mehrere Pfade im Netzwerk geben, d.h., das Netzwerk kann Kreise enthalten, wie es in Figur 2 z.B. mit den Knoten N3 bis N6 angedeutet ist.

Das Ziel (Zielfunktion) ist so viele Applikationen wie möglich in der Infrastruktur zu platzieren. Eine Zuordnung bzw. eine Verteilung von einer oder von mehreren Applikationen kann erfolgen, wenn noch keine Applikationen zuvor zugeordnet wurden oder wenn schon Applikationen auf Rechenknoten schon zuvor zugewiesen wurden und diese deshalb schon für ein gewisse Auslastung in der Infrastruktur sorgen.

In der MILP-Formulierung gelten die folgenden Bezeichnungen:

Indices:

*WLs*                    Menge der zu verteilenden (Software-) Komponenten (Workloads)

(fortgesetzt)

| | |
|---|---|
| *Nodes* | Menge der Rechen- und Netzwerkknoten |
| *NodesForWL(w)* | Menge der möglichen Knoten, auf denen Komponente w platziert werden kann |
| *WLsForNode(n)* | Menge der möglichen Komponenten, die auf Knoten n platziert werden können |
| *Paths(s,d)* | Menge der Pfade im Netzwerk mit Startknoten s *(oder source)* und Zielknoten d (oder dest). Es kann mehrere Pfade von einem Startknoten zu einem Zielknoten geben, d.h. Kreise sind im Netzwerk erlaubt. Zudem muss die Richtung der Pfade beachtet werden. |
| *Paths* | Menge alle Pfade im Netzwerk d.h. die Vereinigung aller Mengen *Paths(s,d)* |
| BackForwardPaths | Menge aller Tupel von Pfaden *(p1, p2),* die einen Vorwärts- und einen Rückwärtspfad bilden d.h. der Startknoten *source(p1)* von Pfad *p1* ist der Zielknoten *dest(p2)* von Pfad *p2* und der Startknoten *source(p2)* von Pfad *p2* ist der Zielknoten *dest(p1)* von Pfad *p1* |
| *PathsWithLink (n1,n2)* | Menge alle Pfade im Netzwerk, dieb die Verbindung *(n1,n2)* zwischen Knoten *n1* und n2 benutzen |
| *Int* | Menge der Schnittstellen *(w1, w2)* |
| *Apps* | Menge der Applikationen |
| *WLsOfApp(a)* | Menge der Komponenten, aus der eine App a besteht |
| *Groups* | Menge von Gruppen. Eine Gruppe besteht aus mehreren Komponenten. Komponenten einer Gruppe dürfen nicht auf den gleichen Knoten platziert werden. |
| *WLsOfGroup(g)* | Komponenten, die der Gruppe g angehören. |

Parameter:

| | |
|---|---|
| WLcpu(w) | Rechenleistung (CPU), die Komponente w verbraucht |
| WLram(w) | Arbeitsspeicher (RAM), den Komponente w verbraucht |
| NodeRAM(n) | Arbeitsspeicherkapazität (RAM), die Knoten n zur Verfügung stellt |
| NodeCPU(n) | Rechenleistung (CPU), die Knoten n zur Verfügung stellt |
| LinkBandwidth(n1, n2) | Zur Verfügung stehende Bandbreite auf der Verbindung zwischen Knoten *n1* und *n2* |
| IntBandwidth(w1, w2) | Bandbreite, die von Schnittstelle (w1, w2) benötigt wird |
| PathLatency(p) | Latenz des Pfades p |
| IntLatency(w1, w2) | Maximale Latenz für die Schnittstelle (w1, w2) |

Variablen:

| | |
|---|---|
| setup$_{w,n}$ | Zuordnung von Komponente w zu Knoten n. In diesem Fall nimmt die Variable den Wert 1 an, anderenfalls den Wert 0. |
| path$_{w1,w2,p}$ | Zuordnung der Schnittstelle *(w1, w2)* zu dem Pfad p. Dabei muss *w1* dem Startknoten *source(p)* des Pfades *p* und *w2* dem Zielknoten *dest (p)* zuordenbar sein d.h. *source(p) E NodesForWL(w*1) und *dest (p) E NodesForWL(w*2). Die Variable nimmt den Wert 1 an, falls für das Interface *(w1, w2)* im Netzwerk der Pfad p benutzt wird, andernfalls 0. |

MILP-Formulierung:

Maximierungszielfunktion:

$$\sum_{w \in WLs} \sum_{n \in NodesForWL(w)} \text{setup}_{w,n}$$

Nebenbedingungen:

(1) Für jeden Knoten darf dessen CPU-Kapazität nicht überschritten werden:

$$\sum_{w \in WLsForNode(n)} WLcpu(w)\, setup_{w,n} \leq NodeCPU(n) \qquad n \in Nodes : NodeCpu(n) > 0$$

(2) Für jeden Knoten darf dessen RAM-Kapazität nicht überschritten werden:

$$\sum_{w \in WLsForNode(n)} WLram(w)\, setup_{w,n} \leq NodeRAM(n) \qquad n \in Nodes : NodeRAM(n) > 0$$

(3) Jede Komponente darf höchstens einem Knoten zugewiesen werden:

$$\sum_{n \in NodesForWL(w)} setup_{w,n} \leq 1 \qquad w \in WLs$$

(4)Entweder sind alle Komponenten einer App auf Knoten im Netzwerk verteilt oder gar keine davon:

$$\sum_{n \in NodesForWL(w1)} setup_{w1,n} - \sum_{n \in NodesForWL(w2)} setup_{w2,n} = 0$$

$$a \in Apps, w1 \in WLsOfApp(a),$$

$$w2 \in WLsOfApp(a) : w1 < w2$$

(5)Wenn ein Paar von Komponenten einem Paar von Knoten im Netzwerk zugewiesen wird, dann muss auch ein Pfad zwischen den ausgewählten Knoten aktiv sein, der von der Schnittstelle der beiden Komponenten benutzt werden kann. Dazu werden folgende Pfadrestriktionen für alle Komponenten *w*1, *w2* ∈ *WLs* und alle Knotenpaare *source, dest* ∈ *Nodes* definiert, für die (*w*1,*w*2) ∈ *Int, source* ∈ *NodesForWL(w*1),*dest* ∈ *NodesForWL(w2)* gilt und für die zwischen dem Knoten *source* und dem Knoten *dest* ein Pfad existiert, d.h. *Paths(source, dest)* ≠ Ø, *Paths(source, dest)* ⊆ *Paths:*

$$setup_{w1,source} + setup_{w2,dest} - 1 \leq \sum_{p \in Paths(source,dest)} path_{w1,w2,p}$$

$$\sum_{p \in Paths(source,dest)} path_{w1,w2,p} \leq setup_{w1,source}$$

$$\sum_{p \in Paths(source,dest)} path_{w1,w2,p} \leq setup_{w2,dest}$$

(6)Wenn ein Pfad durch Ungleichungen (5) aktiviert wird, so muss auch der entsprächende Rückwärtspfad aktiviert sein:

$$\mathrm{path}_{w1,w2,p1} = \mathrm{path}_{w2,w1,p2}$$

$$w1, w2 \in WLs, p1, p2 \in Paths:$$
$$(p1, p2) \in BackForwardPaths, p1 < p2$$
$$source(p1) \in NodesForWL(w1),$$
$$dest(p1) \in NodesForWL(w2),$$
$$(w1, w2), (w2, w1) \in Int,$$

(7) Die maximale zur Verfügung stehende Bandbreite einer jeden Verbindung wird durch die von den Schnittstellen benötigte Bandbreite, die diese Verbindung benutzen, nicht überschritten, d.h., für alle $(n1, n2) \in Links$ mit $n1$, $n2$ $\in Nodes$ :

$$\sum_{\substack{w1, w2 \in WLs, \\ p \in PathsWithLink(n1,n2): \\ (w1,w2) \in Int, \\ source(p) \in NodesForWL(w1), \\ dest(p) \in NodesForWL(w2)}} \mathrm{path}_{w1,w2,p} \cdot IntBandwidth(w1, w2)$$

$$\leq LinkBandwidht(n1, n2)$$

(8) Ein Pfad p darf nur für eine Schnittstelle *(w1,w2)* gewählt werden, wenn die Latenz des Pfades die maximale Latenz der Schnittstelle nicht überschreiten.

$$\mathrm{path}_{w1,w2,p} \cdot PathLatency(p) \leq IntLatency(w1, w2)$$
$$w1, w2 \in WLs, p \in Paths:$$

$$(w1, w2) \in Int,$$
$$source(p) \in NodesForWL(w1),$$
$$dest(p) \in NodesForWL(w2)$$

(9) Komponenten, die einer Gruppe angehören, müssen auf unterschiedliche Knoten verteilt werden, bzw., es dürfen keine zwei Komponenten einer Gruppe dem gleichen Knoten zugeordnet sein:

$$\sum_{\substack{w \in WLsOfGroup(g): \\ w \in WLsForNode(n)}} \mathrm{setup}_{w,n} \leq 1$$

$$g \in Groups, n \in Nodes: NodeRAM(n) > 0, NodeCPU(n) > 0$$

(10) Variablenrestriktionen:

$$\mathrm{setup}_{w,n} \in \{0,1\} \qquad w \in WLs, n \in Nodes$$
$$\mathrm{path}_{w1,w2,p} \in \{0,1\} \qquad w1, w2 \in WLs, p \in Paths:$$
$$(w1, w2) \in Int,$$
$$source(p) \in NodesForWL(w1),$$
$$dest(p) \in NodesForWL(w2)$$

Der Datenaustausch zwischen mehreren Applikationen kann durch Hinzufügen weiterer linearer Ungleichungen modelliert werden.

Die fähigkeitsspezifischen Eigenschaften - wie z.B. die Ausgangsauslastung der Rechenknoten (z.B. CPU, RAM) sowie die übertragungsspezifischen Eigenschaften z.B. Bandbreite der Pfade wird im MIP-Modell berücksichtigt. Bei der Auswahl der Pfade kann bei den übertragungsspezifischen Eigenschaften auch die zugrundliegende Übertragungstechnologie der Verbindung(en) eine Rolle spielen. Die Übertragungstechnologie kann drahtlos, d.h. funkbasiert (z.B. Mobilfunk, Wlan), oder als Art Ad hoc Verbindung (meist z.B. Bluetooth, NFC, Zigbee, Infrarot) oder als drahtgebunde Verbindung (z.B. Local, Wide Area bzw. Metropolitan Area Netzwork) ausgebildet sein. So gilt z.B. eine Funkverbindung als weniger angriffts- bzw. ausfallsicher als eine drahtgebundene Verbindung. Dafür ist sie meist auch in Gegenden oder Domänen vorhanden, in denen kein Kabel verlegt ist.

Eine Kostenfunktion kann mehrere Optimierungskriterien kombinieren, wie z.B. aufwandsorientierte Kostenfaktoren für die Infrastrukturkomponenten (z.B. der Rechenknoten, Netzwerkverbindungen) oder Leistungskriterien der Applikationen wie die ressourcenspezifischen bzw. übertragungsspezifischen Eigenschaften (z.B. Verfügbarkeit, Latenzzeit). Die Zielfunktion kann aus einer gewichteten Summe der einzelnen Faktoren bzw. Kriterien bestehen. Dadurch kann die Optimierung anwendungsspezifisch konfiguriert werden.

Es können nicht nur die fähigkeitsspezifischen, übertragungsspezifischen und ressourcenspezifischen Eigenschaften, sondern auch kryptographischspezifische Eigenschaften berücksichtigt werden.

Kryptographische Eigenschaften können durch eine Art Härtemaß hinsichtlich einer Wahrscheinlichkeit, dass von außen ein Angriff erfolgreich ist, ausgedrückt werden. So könnte ein asymmetrisches Verschlüsselungsverfahren ein anderes Härtemaß aufweisen als ein symmetrisches Verschlüsselungsverfahren. Auch die Wahl der Hashfunktion, wie sie bei der Blockkette verwendet wird, könnte ein gewisses Härtemaß ausmachen. Weitere neben vielen anderen kryptographische Schutzmaßnahmen sind Signaturverfahren und ggf. Zertifikate. Auch diesen kann ein Härtemaß zugewiesen werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Laufzeitumgebung oder Betriebsverfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Verfahrensschritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen oder zentralen Speichern abgelegt sein, es ist aber auch möglich, die Instruktionen auf einem entfernten System abzulegen und darauf via Netzwerk zuzugreifen.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Einrichtungen bzw. Einheiten bestehen, die in eine Vorrichtung integriert sein können. Besteht ein Prozessor aus mehreren Einrichtungen, können diese zur parallelen oder sequentiellen Verarbeitung bzw. Ausführung von Instruktionen ausgelegt bzw. konfiguriert sein.

**Patentansprüche**

1. Rechnergestütztes Verfahren zum Verteilen von Softwarekomponenten einer oder mehreren Applikationen auf für deren Ausführung geeignete Infrastrukturkomponenten einer industriellen Infrastruktur, welche eine Menge von Infrastrukturkomponenten umfasst, welche aus einer Menge von Rechenknoten (C) und einer Menge von Netzwerkknoten (N) gebildet wird, wobei eine Applikation eine oder mehrere Softwarekomponenten aufweist, die über Schnittstellen ($I_{01}$ bis $I_{03}$, $I_{13}$) untereinander Daten austauschen und/oder übergeben, wobei die Rechenknoten jeweils mit wenigstens einer Infrastrukturkomponente über eine Verbindung verbindbar oder verbunden sind, welche zumindest Teil eines zur Infrastruktur gehörigen Kommunikationsnetzwerkes ist, an das die Rechenknoten angeschlossen sind, wobei die Rechenknoten jeweils fähigkeitsspezifische Eigenschaften, die Verbindungen jeweils übertragungsspezifische Eigenschaften aufweisen, **dadurch gekennzeichnet, dass** die Verteilung der Softwarekomponenten mit dem Ziel optimiert wird, dass möglichst viele Applikationen einer vorgebbaren Menge von Applikationen in der Infrastruktur unter der Voraussetzung zur Anwendung kommen können, dass jede Softwarekomponente einer Applikation nur einem Rechenknoten, auf welchem sie unter Berücksichtigung der fähigkeitsspezifischen Eigenschaften ausführbar ist, zugewiesen wird und dass für jede Schnittstelle zwischen zumindest zwei dieser zugewiesenen Softwarekomponenten eine Verbindung oder mehrere via ein oder mehrere Netzwerkknoten hintereinander gekoppelte Verbindungen unter Berücksichtigung der übertragungsspezifischen und ressourcenspezifischen Eigenschaften ausgewählt wird oder werden.

2. Verfahren nach dem vorhergehenden Anspruch, **dadurch gekennzeichnet, dass** alle Softwaresoftwarekomponenten einer Applikation, die zur Anwendung kommen soll, je einem Rechenknoten zugewiesen wird.

3. Verfahren nach einem der vorhergehenden Ansprüche, **dadurch gekennzeichnet, dass** bei Auswahl mehrerer gekoppelten Verbindungen für eine Schnittstelle die Summe der Werte der übertragungsspezifischen Eigenschaften über die mehreren Verbindungen den entsprechenden oder vergleichbaren Wert der schnittstellenspezifischen Eigenschaft der Schnittstelle unterschreiten oder identisch sein muss.

4. Verfahren nach einem der vorhergehenden Ansprüche, **dadurch gekennzeichnet, dass**, wenn mehrere Schnittstellen über die gleiche Verbindung geführt werden sollen, dann muss die Summe der Werte der schnittstellenspezifischen Eigenschaften über die mehreren Schnittstellen den entsprechenden oder vergleichbaren Wert der übertragungsspezifischen Eigenschaft der gleichen Verbindung unterschreiten oder identisch sein.

5. Verfahren nach einem der vorhergehenden Ansprüche, **dadurch gekennzeichnet, dass** und die Netzwerkknoten jeweils ressourcenspezifische Eigenschaften aufweisen, die bei der Auswahl der einen oder mehreren Verbindungen berücksichtigt werden.

6. Verfahren nach einem der vorhergehenden Ansprüche, **dadurch gekennzeichnet, dass** bei der Verteilung der Softwarekomponenten auch kryptographischspezifische Eigenschaften der Infrastrukturkomponenten berücksichtigt werden.

7. Verfahren nach einem der vorhergehenden Ansprüche, **dadurch gekennzeichnet, dass** die Optimierung mittels gemischt-ganzzahliger Optimierung durchgeführt wird.

8. Verfahren nach einem der vorhergehenden Ansprüche, **dadurch gekennzeichnet, dass** wenn Daten von einem ersten Rechenknoten zu einem zweiten Rechenknoten über eine oder mehrere gekoppelte Verbindungen übergeben werden, dann werden umgekehrt vom zweiten Rechenknoten zum ersten Rechenknoten Daten über dieselbe Verbindung oder dieselben gekoppelten Verbindung übergeben.

9. Verfahren nach einem der vorhergehenden Ansprüche, **dadurch gekennzeichnet, dass** eine Gewichtung bei der Berücksichtigung der fähigkeitsspezifischen, der übertragungsspezifischen und/oder der ressourcenspezifischen Eigenschaften in die Optimierung eingeht.

10. Verfahren nach einem der vorhergehenden Ansprüche, **dadurch gekennzeichnet, dass** die Softwarekomponenten einer Applikation zu vorgebbaren, unterschiedlichen Teilmengen gehören, wobei alle Softwarekomponenten einer Teilmenge jeweils zu unterschiedlichen Rechenknoten zugewiesen werden.

11. Vorrichtung zum Verteilen von Softwarekomponenten einer oder mehreren Applikationen auf für deren Ausführung geeignete Infrastrukturkomponenten einer industriellen Infrastruktur, welche eine Menge von Infrastrukturkomponenten umfasst, welche aus einer Menge von Rechenknoten (C) und einer Menge von Netzwerkknoten (N) gebildet wird, wobei eine Applikation eine oder mehrere Softwarekomponenten aufweist, die über Schnittstellen ($I_{01}$ bis $I_{03}$, $I_{13}$) untereinander Daten austauschen und/oder übergeben, wobei die Rechenknoten jeweils mit wenigstens einer Infrastrukturkomponente über eine Verbindung verbindbar oder verbunden sind, welche zumindest Teil eines zur Infrastruktur gehörigen Kommunikationsnetzwerkes ist, an das die Rechenknoten angeschlossen sind, wobei die Rechenknoten jeweils fähigkeitsspezifische Eigenschaften, die Verbindungen jeweils übertragungsspezifische Eigenschaften aufweisen, **gekennzeichnet durch**

eine Optimierungskomponente, die dazu ausgelegt ist, die Verteilung der Softwarekomponenten mit dem Ziel zu optimieren, dass möglichst viele Applikationen einer vorgebbaren Menge von Applikationen in der Infrastruktur unter der Voraussetzung zur Anwendung kommen können, dass jede Softwarekomponente einer Applikation nur einem Rechenknoten, auf welchem sie unter Berücksichtigung der fähigkeitsspezifischen Eigenschaften ausführbar ist, zugewiesen wird und dass für jede Schnittstelle zwischen zumindest zwei dieser zugewiesenen Softwarekomponenten eine Verbindung oder mehrere via ein oder mehrere Netzknoten hintereinander gekoppelte Verbindungen unter Berücksichtigung der übertragungsspezifischen und ressourcenspezifischen Eigenschaften ausgewählt wird oder werden.

12. Vorrichtung nach dem vorhergehenden Anspruch, **dadurch gekennzeichnet, dass** alle Softwaresoftwarekomponenten einer Applikation, die zur Anwendung kommen soll, je einem Rechenknoten zugewiesen werden können.

13. Computerprogrammprodukt, das in einen Speicher der Vorrichtung, insbesondere nach einem der vorherigen Vorrichtungsansprüchen, ladbar ist, umfassend Programmcodeteile, die dazu ausgelegt sind, das Verfahren nach einem der vorhergehenden Verfahrensansprüchen auszuführen.

# FIG 1

## FIG 2

**Europäisches Patentamt**
**European Patent Office**
**Office européen des brevets**

# EUROPÄISCHER RECHERCHENBERICHT

Nummer der Anmeldung

EP 20 17 7414

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2019/007258 A1 (SURCOUF ANDRE [FR] ET AL) 3. Januar 2019 (2019-01-03) <br> * Absatz [0003] * <br> * Absatz [0011] * <br> * Absatz [0014] - Absatz [0020] * <br> * Absatz [0025] - Absatz [0037] * <br> * Absatz [0050] - Absatz [0051] * <br> * Absatz [0057] - Absatz [0060] * <br> ----- | 1-13 | INV. <br> G06F9/50 <br> H04L12/803 <br> H04L29/08 |
| X | MOHAMED ABU SHARKH ET AL: "Optimal and suboptimal resource allocation techniques in cloud computing data centers", JOURNAL OF CLOUD COMPUTING, BIOMED CENTRAL LTD, LONDON, UK, Bd. 6, Nr. 1, 9. März 2017 (2017-03-09), Seiten 1-17, XP021242786, DOI: 10.1186/S13677-017-0075-2 <br> * Seite 3, linke Spalte, Absatz 2 - Seite 4, linke Spalte, Absatz 3 * <br> * Seite 7, linke Spalte, Absatz 1 - Seite 8, linke Spalte, Absatz 4 * <br> ----- | 1-13 | |

RECHERCHIERTE SACHGEBIETE (IPC)

G06F
H04L

Der vorliegende Recherchenbericht wurde für alle Patentansprüche erstellt

| Recherchenort | Abschlußdatum der Recherche | Prüfer |
|---|---|---|
| München | 22. Juli 2020 | Milasinovic, Goran |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 20 17 7414

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-07-2020

| Im Recherchenbericht angeführtes Patentdokument | Datum der Veröffentlichung | Mitglied(er) der Patentfamilie | Datum der Veröffentlichung |
|---|---|---|---|
| US 2019007258 A1 | 03-01-2019 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 19152467

- US 16365965 B

**In der Beschreibung aufgeführte Nicht-Patentliteratur**

- **VALERIA CARDELLINI et al.** Optimal Operator Placement for Distributed Stream Processing Applications. *DEBS '16: Proceedings of the 10th ACM International Conference on Distributed and Event-based Systems,* Juni 2016, 69-80, https://doi.org/10.1145/2933267.2933312